# EUROPÄISCHE PATENTSCHRIFT

(11) **EP 1 232 070 B1**
(45) Veröffentlichungstag und Bekanntmachung des Hinweises auf die Patenterteilung: **19.01.2005**
(21) Anmeldenummer: 00979566.7
(22) Anmeldetag: 15.11.2000
(51) Int. Cl.: B60N 3/04

(54) **BEFESTIGUNGSVORRICHTUNG FÜR EINE ZUSATZMATTE**
FASTENING DEVICE FOR AN ADDITIONAL MAT
DISPOSITIF DE FIXATION POUR TAPIS COMPLEMENTAIRE

(30) Priorität: 15.11.1999 DE 19954857
(43) Veröffentlichungstag der Anmeldung: 21.08.2002
(73) Patentinhaber: Saxonia-Franke GmbH & Co, 73037 Göppingen (DE)
(72) Erfinder: AUSPRUNG, Erich, 73312 Geislingen/Steige (DE)
(74) Vertreter: von Puttkamer, Nikolaus, Dipl.-Ing.
(86) Internationale Anmeldenummer: PCT/EP2000/011315
(87) Internationale Veröffentlichungsnummer: WO 2001/036227

(56) Entgegenhaltungen:
- EP-A- 0 902 197
- DE-A- 19 617 408
- DE-A- 19 805 949
- DE-U- 29 908 823

## Beschreibung

Die Erfindung betrifft eine Befestigungsvorrichtung für eine Zusatzmatte nach dem Oberbegriff des Patentanspruches 1.

Aus der DE 19617408.2 geht eine Befestigungseinrichtung für eine Zusatzmatte hervor, die im wesentlichen ein an einem Teppichboden oder dergleichen eines Kraftfahrzeuges befestigbares Basiselement, das einen über den Teppichboden hinausragenden Teilbereich aufweist, und ein in einer Öffnung der Zusatzmatte befestigbares Aufsetzelement aufweist, das an dem über den Teppichboden hinausragenden Teilbereich des Basiselementes befestigbar ist. Gemäß einer Ausführungsform, die in den Figuren 10 und 11 der genannten Patentschrift dargestellt ist, weist das Aufsetzelement die Form eines hohlzylinderförmigen Teiles auf, das an seiner dem Teppichboden zugewandten Seite einen nach außen weisenden ringförmigen Flansch besitzt und in seinem Inneren ein sich senkrecht zur Längsachse erstreckendes Wandteil mit einer Öffnung aufweist, durch die ein Kopfteil des über den Teppichboden hinausragenden Teilbereiches des Basiselementes hindurchführbar ist, wobei die Öffnung schlüssellochartig in eine Aussparung übergeht, deren Durchmesser geringfügig größer ist als der Außenumfang des Teilbereiches, so daß der Teilbereich in den Bereich der Aussparung verschiebbar ist und eine zwischen dem Kopfteil und dem Teilbereich bestehende Schulter auf dem Randbereich der Aussparung aufliegt, um das Aufsetztteil am Basisteil festzuhalten.

Ein Problem der bekannten Befestigungsvorrichtung besteht darin, daß eine Montageperson nicht eindeutig feststellen kann, wann der Teilbereich des Basiselementes vollständig in die Aussparung eingeschoben ist. Außerdem sind keine Vorkehrungen getroffen, um zu verhindern, daß der Teilbereich wieder aus der weiteren Öffnung in die Öffnung zurückverschoben werden kann.

Die Aufgabe der vorliegenden Erfindung besteht daher darin, ein Aufsetzelement für eine Befestigungsvorrichtung für eine Zusatzmatte so auszugestalten, daß vermieden wird, daß der Teilbereich des Basiselementes ungewollt aus der Aussparung in die Offnung zurückgelangt.

Diese Aufgabe wird durch ein Aufsetzelement für eine Befestigungsvorrichtung für eine Zusatzmatte gelöst, das die Merkmale des Patentanspruches 1 umfaßt.

Der wesentliche Vorteil des erfindungsgemäßen Aufsetzelementes besteht darin, daß es im Übergangsbereich zwischen der Öffnung mit dem größeren Durchmesser und der Aussparung mit dem kleineren Durchmesser eine in radialer Richtung betätigbare Einschnappvorrichtung aufweist, die beim Führen des Teilbereiches des Basiselementes von der Öffnung in die Aussparung zunächst nach außen federt und dann wieder nach innen zurückfedert, wenn sich der Teilbereich in der Aussparung befindet. Dadurch wird einerseits erreicht, daß die Einschnappvorrichtung ein unbeabsichtigtes Zurückgleiten des Teilbereiches aus der Aussparung in die Öffnung verhindert und daß außerdem beim Schieben des Teilbereiches von der Öffnung in die Aussparung ein für die Montageperson wahrnehmbares Gefühl und/oder ein hörbares Einschnappgeräusch entsteht, das anzeigt, daß sich der Teilbereich tatsächlich in der Aussparung, das heißt also in der Gebrauchsposition befindet.

Bei einer bevorzugten Ausführungsform der Erfindung weist das Aufsetzelement entlang des Umfanges der Öffnung über den Umfang hinaus nach innen federnde Verriegelungselemente auf, die verriegelnd an einer hinter dem Kopfteil des Basiselementes gebildeten Schulter angreifen, wenn das Aufsetzelement vollständig auf den über den Teppichboden hinausragenden Teilbereich des Basiselementes aufgeschoben ist. Dadurch wird ein ungewolltes Loslösen des Aufsetzelementes vom Basisteil entgegen der Aufsetzrichtung verhindert, wenn der Teilbereich des Basiselementes nicht in die Aussparung verschoben ist.

Im folgenden werden die Erfindungen deren Ausgestaltungen im Zusammenhang mit den Figuren näher erläutert. Es zeigen:
- Figur 1: in schematischer Darstellung eine Ansicht des erfindungsgemäßen Aufsetzelementes von der Seite des Teppichbodens her;
- Figur 2: einen Schnitt entlang der Linie 2 - 2 der Figur 1;
- Figur 3: eine Ansicht des Aufsetzelementes von der dem Teppichboden abgewandten Seite her;
- Figur 4: einen Schnitt durch eine an einem Teppichboden und einer Zusatzmatte montierte Befestigungsvorrichtung, die das erfindungsgemäße Aufsetzelement umfaßt und
- Figur 5: eine Weiterbildung der Erfindung.

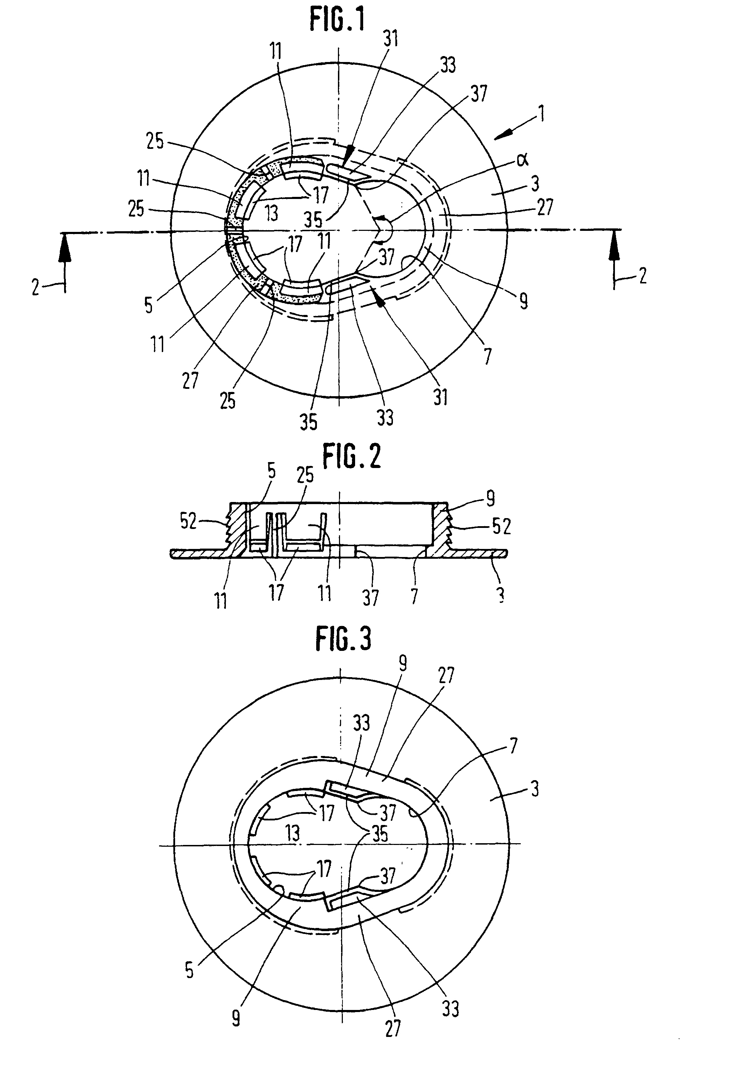

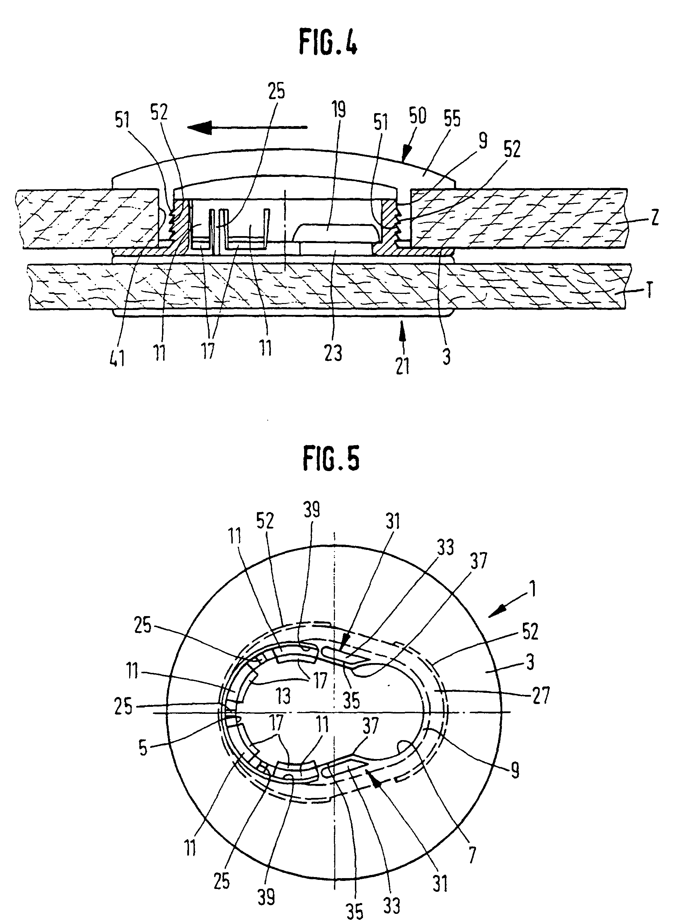

In der Figur 1 ist das vorliegende Aufsetzelement mit 1 bezeichnet. In der ersichtlichen Weise besteht es im wesentlichen aus einem plattenförmigen Teil 3, in dem eine Öffnung 5 mit einem größeren Durchmesser angeordnet ist, die schlüssellochartig in eine Aussparung 7 mit einem kleineren Durchmesser einmündet. Die Öffnung 5 und die Aussparung 7 sind von einem sich senkrecht zu dem plattenförmigen Teil 3 erstreckenden Wandteil 9 umgeben, an das vorzugsweise entlang eines wesentlichen Umfangsbereiches der Öffnung 5 Zungenelemente 11 angeformt sind, die ausgehend vom der dem Teppichboden T abgewandten Seite des Wandteiles 9 in den von der Öffnung 5 umschlossenen Innenraum 13 zu der dem Teppichboden zugewandten Seite hineinragen. An ihren freien Enden weisen die Zungenteile 11 in den Innenraum 13 hineinragende Verriegelungsnasen 17 auf, die in der in der Figur 4 dargestellten Weise verriegelnd hinter das Kopfteil 19 des über den Teppichboden T vorstehenden Teilbereiches 23 des Basisteiles 21 greifen.

Um ein allzu großes Einfedern der Zungenteile 11 und dabei eine verringerte Lebensdauer derselben zu vermeiden, sind vorzugsweise Anschlagelemente 25 jeweils zwischen zwei benachbarten Zungenteilen 11 vorgesehen, die ausgehend vom Innenumfang der Öffnung 5 in radialer Richtung in den Innenraum 13 hineinreichen und an einer Kante enden, die radial außerhalb der Position angeordnet ist, in der sich die Zungenteile 11 in ihrer Ruheposition befinden. Aus diesem Grunde wird der mögliche Ausfederweg der Zungenteile 11 nach außen begrenzt.

Um die Federkraft der Zungenteile 11 möglichst lange aufrecht zu erhalten, ist es gemäß einer besonders bevorzugten Ausführungsform der Erfindung denkbar, in den Zwischenraum zwischen den Zungenteilen 11 und dem Wandteil 9 eine Schicht aus einem federnden Material, vorzugsweise einem gummiartigen Material, wie einem EPDM-Material, z. B. Santoprene ® mit einer Shore-Härte von vorzugsweise 60 bis 80, einzubringen bzw. einzuspritzen. Durch die Federwirkung einer solchen Materialschicht 27 wird erreicht, daß die Zungenelemente 11 nach ihrer radialen Verschiebung beim Aufsetzen des Aufsetzelementes 1 auf das Basiselement 21 wieder zuverlässig in ihre Ursprungsposition zurückgeführt werden. Dies bedeutet, daß durch das erreichte Rückstellverhalten die Lebensdauer der Zungenteile 11 erhöht wird. Um ein besonders einfaches Einbringen des federnden Materials in den genannten Zwischenraum in Umfangsrichtung entlang aller Zungenteile 11 und in die Bereiche dazwischen in einer Operation zu ermöglichen, können bei dieser Ausführungsform die Anschlagteile 25 entfallen.

Im plattenförmigen Teil 3 befindet sich im Übergangsbereich zwischen der Öffnung 5 mit dem größeren Durchmesser und der Aussparung 7 mit dem kleineren Durchmesser eine Einschnappvorrichtung 31, die vorzugsweise dadurch gebildet ist, daß im Randbereich des Übergangsbereiches zwischen Öffnung 5 und Aussparung 7 ein Hohlraum 33 in dem plattenförmigen Teil 3 vorgesehen wird, der im Übergangsbereich einen verdünnten Wandteilbereich 35 bildet, der federnd nach außen drückbar ist, wenn der Teilbereich 23 aus der Öffnung 5 in die Aussparung 7 geschoben wird. Dabei ist dafür Sorge getragen, daß der Wandteilbereich 35 in seiner Ruhelage einen Vorsprung 37 bildet, der am Außenumfang des in der Aussparung 7 befindlichen Teilbereiches 23 anliegt, wobei in der Umfangsrichtung gesehen zwischen den beiden sich gegenüberliegenden Vorsprüngen 37 ein Umfangsbereich der Aussparung 7 besteht, der einen Winkel α überdeckt, der größer als 180° ist. Auf diese Weise wird sichergestellt daß der Teilbereich 23 in der Aussparung 7 festgehalten wird. Der Abstand zwischen den Vorsprüngen 37 ist kleiner als der Durchmesser des Teilbereiches des Basiselementes, damit die gewünschte Einschnappwirkung erreicht wird. Beim Vorbeischieben des Teilbereiches 23 an den Vorsprüngen 37 entsteht ein für die Montageperson wahrnehmbares Geräusch und/oder eine Gegenkraft, deren Überwindung das Eingleiten des Teilbereiches 23 in die Aussparung 7 anzeigt.

Es ist denkbar, um die Federwirkung der Einschnappvorrichtung 31 möglichst lange zu erhalten, in den Hohlraum 33 die oben erwähnte federnde Materialschicht einzubringen bzw. einzuspritzen.

Vorzugsweise sind das plattenartige Teil 3, das Wandteil 9, die Zungenteile 11 mit den daran befindlichen Verriegelungsnasen 17 und die Anschlagteile 25 einstückig durch eine Spritzoperation hergestellt.

Es wird darauf hingewiesen, daß das Rückstellverhalten der Federteile 11 beispielsweise anstelle der Materialschicht 27 auch durch einen Federring 39 hergestellt werden kann, der in den Zwischenraum zwischen den Innenseiten des Wandteiles 9 und den Außenseiten der Zungenteile 17 eingelegt ist. Der Federring 39 überdeckt gemäß Figur 5 vorzugsweise einen Umfangsbereich mit einem Winkel, der zweckmäßigerweise größer als 180° ist und dem Umfangsbereich entspricht, in dem an der Öffnung 5 die Zungenteile 11 angeordnet sind.

Um das Aufsetzteil gemäß Figur 4 am Zusatzteppich Z befestigen zu können, muß dieser eine den Außenkonturen des Wandteiles 9 entsprechende ovale Aufnahmeöffnung 41 aufweisen, die vorzugsweise in der Längsrichtung des Fahrzeuges im Zusatzteppich Z angeordnet ist. Auf diese Weise wird erreicht, daß das Aufsetzelement 1 zur Befestigung am Zusatzteppich Z auf dem Teilbereich 23 zur Längsrichtung des Fahrzeuges gedreht bzw. ausgerichtet wird. Vorzugsweise ist die genannte Aufnahmeöffnung 41 in der Längsrichtung gesehen genau auf den größten Abstand des durch das Wandteil 9 gebildeten Ovales abgestimmt. In der Querrichtung kann die Aufnahmeöffnung 41 größer bemessen sein als die Abmessungen des vom Wandteil 9 gebildeten Ovales in der Querrichtung, so das Verschiebungen in Querrichtung möglich sind, die insbesondere dadurch entstehen, daß sich bei großen Schwankungen zwischen extremer Kälte und extremer Wärme im Teppichboden T Verschiebungen zwischen zwei voneinander beabstandeten Basiselementen 21 in Querrichtung ergeben.

Die Fixierung des Aufsetzelementes 1 am Zusatzteppich Z erfolgt zweckmäßigerweise mit einem Deckelteil 50, das von der dem Teppichboden T abgewandten Seite her auf das Aufsetzteil 1 aufsetzbar ist. Zu diesem Zweck weisen die Außenflächen der sich entlang des großen Abstandes des Ovales gegenüberliegenden Wandteilbereiche des Wandteiles 9 zahnartige Verriegelungsvorsprünge 52 und die entsprechenden Innenseiten des Dekkelteiles 50 zu diesen komplenmentäre Verriegelungsvorsprünge 51 auf. Wenn das Deckelteil 50 das Wandteil 9 außenseitig übergreift, ist die Bemessung der Aufnahmeöffnung 41 des Zusatzteppichs Z auf das Deckelteil 50 abgestimmt. Die Zusatzmatte Z wird zwischen einem nach außen vorstehenden Flansch 55 des Deckelteiles 50 und dem plattenförmigen Teil 3 festgehalten.

## Patentansprüche

1. Befestigungsvorrichtung für eine Zusatzmatte (Z) mit einem plattenförmigen Teil (3), in dem eine Öffnung (5) mit einem größeren Durchmesser angeordnet ist, die in eine Aussparung (7) mit einem kleineren Durchmesser mündet, wobei ein Kopfteil (19) eines sich über einen Teppichboden (T) eines Kraftfahrzeuges in Richtung zur Zusatzmatte (Z) hinauserstreckenden Teilbereiches (23) eines am Teppichboden (T) befestigten Basisteiles (21) durch die Öffnung (5) hindurchführbar ist und wobei der Teilbereich (23) in die Aussparung schiebbar ist, derart, daß der Kopfbereich (19) den Randbereich der Aussparung (7) verriegelnd übergreift, **dadurch gekennzeichnet, daß** in wenigstens einem Übergangsbereich zwischen der Öffnung (5) und der Aussparung (7) eine Einschnappvorrichtung (31) angeordnet ist, die beim Einschieben des Teilbereiches (23) in die Aussparung (7) nach außen federt und nach dem Einschieben des Teilbereiches (23) in die Aussparung (7) zurückfedert, um den Teilbereich (23) in der Aussparung (7) festzuhalten.

2. Befestigungsvorrichtung nach Anspruch 1, **dadurch gekennzeichnet, daß** die Einschnappvorrichtung (31) durch wenigstens einen im Übergangsbereich in dem plattenförmigen Teil (3) angeordneten Hohlraum (33) gebildet ist, der zum Randbereich des Übergangsbereiches einen Wandteilbereich (35) bildet, der federnd in Richtung zum Hohlraum (33) drückbar ist.

3. Befestigungsvorrichtung nach Anspruch 2, **dadurch gekennzeichnet, daß** ein Teil des Wandteilbereiches (35) im ausgefederten Zustand einen Teilbereich des Innenumfanges der Aussparung (7) bildet, der in einem Vorsprung (37) endet.

4. Befestigungsvorrichtung nach Anspruch 2 oder 3, **dadurch gekennzeichnet, daß** sich gegenüberliegend zwei Wandteilbereiche (35) vorgesehen sind.

5. Befestigungsvorrichtung nach Anspruch 4, **dadurch gekennzeichnet, daß** die Teilbereiche der Wandteilbereiche (35) und der Innenumfang der Aussparung (7) zwischen den sich gegenüberliegenden Vorsprüngen (37) einen Winkel (α) überdecken, der größer als 180° ist.

6. Befestigungsvorrichtung nach einem der Ansprüche 1 bis 5, **dadurch gekennzeichnet, daß** die Öffnung (5) und/oder die Aussparung (7) und der Teilbereich (23) des Basisteiles (21) kreisförmig beschaffen sind.

7. Befestigungsvorrichtung nach Anspruch 6, **dadurch gekennzeichnet, daß** die sich gegenüberliegenden Vorsprünge (37) durch einen Abstand voneinander getrennt sind, der kleiner ist als der Durchmesser der Aussparung (7).

8. Befestigungsvorrichtung nach einem der Ansprüche 2 bis 7, **dadurch gekennzeichnet, daß** der Hohlraum (33) mit einem federnden Material, vorzugsweise einem EPDM-Material ausgefüllt ist.

9. Befestigungsvorrichtung nach einem der Ansprüche 2 bis 8, **dadurch gekennzeichnet, daß** das plattenförmige Teil (3) die Hohlräume (33) und die Wandteilbereiche (35) durch eine Spritzoperation aus Kunststoff hergestellt sind.

10. Befestigungsvorrichtung nach einem der Ansprüche 2 bis 9, **dadurch gekennzeichnet, daß** die sich gegenüberliegenden Seiten der Öffnung (5) und der Aussparung (7) von einem Wandteil (9) umgeben sind, das außenseitig Verriegelungsvorsprünge (52) zur Verriegelung an Vorsprüngen (51) eines Deckelteiles (50) aufweist, das kappenartig auf die Wandteile (9) aufsetzbar ist, wobei die Zusatzmatte (Z) zwischen dem Deckelteil (50) und dem plattenförmigen Teil (3) festgehalten wird.

11. Befestigungsvorrichtung nach einem der Ansprüche 1 bis 10, **dadurch gekennzeichnet, daß** im Randbereich der Öffnung (5) federnd nach innen ragende Zungenelemente (11) angeordnet sind, die nach dem Einschieben des Kopfteiles (19) und des Teilbereiches (23) des Basisteiles (21) das Kopfteil (19) mit an ihnen angeordneten Verriegelungsnasen (17) federnd hintergreifen.

12. Befestigungsvorrichtung nach Anspruch 11, **dadurch gekennzeichnet, daß** die Zungenelemente (11) einstückig an dem die Öffnung (5) umgebenden Wandteil (9) ausgebildet sind.

13. Befestigungsvorrichtung nach Anspruch 12, **dadurch gekennzeichnet, daß** in den Raum zwischen den Zungenelementen (11) und dem Wandteil (9) ein federndes Material, insbesondere ein EPDM-Material, eingespritzt ist.

14. Befestigungsvorrichtung nach Anspruch 12, **dadurch gekennzeichnet, daß** in den Raum zwischen den Zungenelementen (11) und dem Wandteil (9) ein Federring (39) eingelegt ist, der die Zungenelemente (11) federnd in ihre Ruhelagen drückt.

## Claims

1. A fastening device for an additional mat (Z) having a plate-shaped part (3), in which an opening (5) having a larger diameter is disposed, which opens into a recess (7) with a smaller diameter, wherein a head part (19) of a sub-region (23) of a base part (21) fixed to the carpet (T) that extends above a carpet (T) of a motor vehicle towards the additional mat (Z) can be passed through the opening (5) and wherein the sub-region (23) can be pushed into the recess in such a manner that the head region (19) grips over the edge region of the recess (7) in locking manner,
**characterised in that** in at least one transitional region between the opening (5) and the recess (7) is disposed a snap-in device (31), which springs outwards when the sub-region (23) is pushed into the recess (7) and springs back again after the sub-region (23) has been pushed into the recess (7) so as to hold the sub-region (23) securely in the recess (7).

2. A fastening device according to Claim 1,
**characterised in that** the snap-in device (31) is formed by at least one cavity (33), which is disposed in the transitional region in the plate-shaped part (3) and forms toward the edge region of the transitional region a wall sub-region (35), which can be pressed resiliently towards the cavity (33).

3. A fastening device according to Claim 2,
**characterised in that** a part of the wall part region (35) in the rebounded state forms a sub-region of the inner periphery of the recess (7), which ends in a protrusion (37).

4. A fastening device according to Claim 2 or 3,
**characterised in that** two wall sub-regions (35) are provided opposite one another.

5. A fastening device according to Claim 4,
**characterised in that** the sub-regions of the wall part regions (35) and the inner periphery of the recess (7) between the opposite protrusions (37) cover an angle (α) which is greater than 180°.

6. A fastening device according to one of Claims 1 to 5,
**characterised in that** the opening (5) and/or the recess (7) and the sub-region (23) of the base part (21) have a circular design.

7. A fastening device according to Claim 6,
**characterised in that** the opposite protrusions (37) are separated from each other by a distance which is less than the diameter of the recess (7).

8. A fastening device according to one of Claims 2 to 7,
**characterised in that** the cavity (33) is filled with a resilient material, preferably an EPT material.

9. A fastening device according to one of Claims 2 to 8,
**characterised in that** the plate-shaped part (3), the cavities (33) and the wall part regions (35) are produced by an injection operation from plastic.

10. A fastening device according to one of Claims 2 to 9,
**characterised in that** opposite sides of the opening (5) and of the recess (7) are surrounded by a wall part (9), which on the outside comprises locking protrusions (52) for locking to protrusions (51) of a cover part (50), which can be placed in the manner of a cap onto the wall parts (9), with the additional mat (Z) being held fast between the cover part (50) and the plate-shaped part (3).

11. A fastening device according to one of Claims 1 to 10,
**characterised in that** disposed in the edge region of the opening (5) are resiliently inwardly projecting tongue elements (11), which after the insertion of the head part (19) and of the sub-region (23) of the base part (21) resiliently engage behind the head part (19) by locking lugs (18) disposed thereon.

12. A fastening device according to Claim 11,
**characterised in that** the tongue elements (11) are constructed in one piece on the wall part (9) surrounding the opening (5).

13. A fastening device according to Claim 12,
**characterised in that** a resilient material, in particular an EPT material, is injected into the space between the tongue elements (11) and the wall part (9).

14. A fastening device according to Claim 12,
**characterised in that** a spring ring (39), which presses the tongue elements (11) resiliently into their positions of rest, is inserted into the space between the tongue elements (11) and the wall part (9).

## Revendications

1. Dispositif de fixation pour un tapis additionnel (Z) comportant un élément en forme de plaque (3) dans lequel est aménagée une ouverture (5) de plus grand diamètre qui débouche dans une échancrure (7) de plus petit diamètre, une partie tête (19) d'une portion (23) d'un élément formant base (21) fixé à la moquette (T) d'un véhicule automobile, qui s'étend au-dessus de ladite moquette (T) en direction du tapis additionnel (Z), pouvant être engagée dans l'ouverture (5), la portion d'élément (23) pouvant coulisser dans l'échancrure d'une manière telle que la partie tête (19) chevauche en assurant le verrouillage le bord de l'échancrure (7), **caractérisé par le fait que** dans au moins une zone de raccordement entre l'ouverture (5) et l'échancrure (7) est disposé un dispositif d'encliquetage (31) qui, lors du glissement de la portion d'élément (23) dans l' échancrure (7) est repoussé élastiquement vers l'extérieur et après engagement de la portion d'élément (23) dans l'échancrure (7) revient élastiquement en position pour bloquer la portion d'élément (23) dans l'échancrure (7).

2. Dispositif de fixation selon la revendication 1, **caractérisé par le fait que** le dispositif d'encliquetage (31) est formé d'au moins une cavité (33) aménagée dans l'élément en forme de plaque (3), dans la zone de raccordement, qui côté bord de la zone de raccordement forme une portion de paroi (35) qui peut être repoussée élastiquement en direction de la cavité (33).

3. Dispositif de fixation selon la revendication 2, **caractérisé par le fait qu'**une partie de la portion de paroi (35), à l'état relâché, constitue une portion du périmètre intérieur de l'échancrure (7) qui se termine par une saillie (37).

4. Dispositif de fixation selon la revendication 2 ou 3, **caractérisé par le fait qu'**il est prévu deux portions de paroi (35) disposées en vis-à-vis.

5. Dispositif de fixation selon la revendication 4, **caractérisé par le fait que** les parties des portions de paroi (35) et le périmètre intérieur de l'échancrure (7) entre les saillies (37) en vis-à-vis couvrent un angle (α) qui est supérieur à 180°.

6. Dispositif de fixation selon une des revendications 1 à 5, **caractérisé par le fait que** l'ouverture (5) et/ou l'échancrure (7) et la portion (23) de l'élément formant base (21) sont circulaires.

7. Dispositif de fixation selon la revendication 6, **caractérisé par le fait que** les saillies (37) mutuellement en vis-à-vis sont séparées l'une de l'autre par une distance qui est inférieure au diamètre de l'échancrure (7).

8. Dispositif de fixation selon une des revendications 2 à 7, **caractérisé par le fait que** la cavité (33) est remplie d'un matériau élastique, de préférence d'EPDM.

9. Dispositif de fixation selon une des revendications 2 à 8, **caractérisé par le fait que** l'élément en forme de plaque (3), la cavité (33) et les portions de paroi (35) sont fabriquées en matière plastique au cours d'une opération de moulage injection.

10. Dispositif de fixation selon une des revendications 2 à 9, **caractérisé par le fait que** les côtés en vis-à-vis de l'ouverture (5) et de l'échancrure (7) sont entourés d'une paroi (9) qui porte côté extérieur des saillies d'encliquetage (52) pour l'encliquetage avec des saillies (51) d'un élément formant couvercle (50) qui peut être enfiché à la manière d'une coiffe sur la paroi (9), le tapis additionnel (Z) étant tenu entre l'élément formant couvercle (50) et l'élément en forme de plaque (3).

11. Dispositif de fixation selon une des revendications 1 à 10, **caractérisé par le fait que** dans la zone de bord de l'ouverture (5) sont disposés des éléments en forme de languettes (11) qui font saillie élastiquement vers l'intérieur et qui après engagement de la partie tête (19) et de la portion d'élément (23) de l'élément formant base (21) s'accrochent derrière la partie tête (19) par des ergots de verrouillage (17) prévus sur ceux-ci.

12. Dispositif de fixation selon la revendication 11, **caractérisé par le fait que** les éléments en forme de languettes (11) sont réalisés d'une pièce sur la paroi (9) qui entoure l'ouverture (5).

13. Dispositif de fixation selon la revendication 12, **caractérisé par le fait que** dans la chambre entre les éléments en forme de languettes (11) et la paroi (9) est injecté un matériau élastique en particulier de l'EPDM.

14. Dispositif de fixation selon la revendication 12, **caractérisé par le fait que** dans la chambre entre les éléments en forme de languettes (11) et la paroi (9) est inséré un anneau élastique (39) qui repousse élastiquement les éléments en forme de languettes (11) dans leur position de repos.
